# NOUVEAU FASCICULE DE BREVET EUROPEEN

(11) **EP 1 006 502 B2**
(45) Date de publication et mention de la décision concernant l'opposition: **15.02.2017**
(45) Mention de la délivrance du brevet: 03.05.2006
(21) Numéro de dépôt: 99402991.6
(22) Date de dépôt: 01.12.1999
(51) Int. Cl.: G08G 1/127, G08G 1/0968, G01C 21/20, G01S 5/14, G08G 1/09

(54) **Système d'aide à la navigation terrestre et terminal d'un tel système**
Landnavigationshilfsanlage und Endgerät solcher Anlage
Terrestrial navigation aid system and terminal of such a system

(30) Priorité: 02.12.1998 FR 9815202
(43) Date de publication de la demande: 07.06.2000
(73) Titulaire: Apple Inc., Cupertino, CA 95014 (US)
(72) Inventeur: Heurtaux, Frédéric, 13610 Le Puy Sainte Reparade (FR); Nicaise, Pierre, 60580 Coye La Fôret (FR)
(74) Mandataire: Lang, Johannes

(56) Documents cités:
- EP-A- 0 748 727
- EP-A- 0 837 341
- WO-A-98/15075
- WO-A1-98/45823
- DE-A- 19 640 068
- DE-A1- 19 611 915
- DE-A1- 19 753 172
- US-A- 5 543 789
- US-A- 5 652 706

## Description

Un système d'aide à la navigation terrestre fournit à un mobile des informations lui permettant de choisir sa route, pour atteindre une destination fixée, en fonction des voies de circulation existantes et de leur encombrement. On peut ainsi optimiser le temps de trajet ou la distance à parcourir. Par mobile, il faut essentiellement entendre un véhicule ou un piéton.

Cependant, le conducteur d'un véhicule automobile équipé d'un tel système ne vise pas toujours un lieu de destination précis, en ce sens qu'il peut rechercher un service et les fournisseurs de celui-ci, tels que station-service, pharmacie ou hôtel. Il lui faut donc d'abord localiser comme il peut un lieu de destination, où ce service est fourni, c'est-à-dire choisir sa destination, et ce n'est qu'après cette localisation qu'il peut utiliser le système d'aide à la navigation, en lui fournissant la destination visée. En outre, il est préférable de vérifier, avant de se déplacer, que le service localisé est effectivement disponible.

La phase de localisation nécessite de se renseigner à partir d'un recueil d'adresses ou, sinon, auprès de personnes rencontrées. Il faut ensuite réussir à reporter sur un plan la destination visée. Une telle exploitation fait perdre un temps considérable et peut entraîner des trajets inutiles, ce qui est gênant en cas d'urgence ou en cas de manque de carburant.

Le document WO 98/15075 A décrit un système de navigation où des destinations telles que des fournisseurs de services sont sélectionnées par le conducteur du véhicule. Le document WO 98/45823 concerne un système d'aide à la navigation comprenant un terminal mobile relié à un serveur centralisé.

La présente invention vise à proposer un système d'aide à la navigation terrestre qui fournisse, à son utilisateur se déplaçant à pied ou à bord d'un véhicule, des informations lui permettant de choisir sa destination.

A cet effet, l'invention concerne tout d'abord un système d'aide à la navigation terrestre conforme à la revendication 1.

Ainsi, le terminal commande automatiquement, par ses déplacements, les moyens de localisation de celui-ci, sans la nécessité d'une intervention de l'utilisateur, et ceux-ci commandent à leur tour les moyens de sélection.

Le serveur désigne ainsi, automatiquement et sans délai, à l'utilisateur du terminal, des fournisseurs d'un service désiré dans une zone dans laquelle se trouve cet utilisateur, et celui-ci peut alors en sélectionner un pour se rendre à l'endroit correspondant. Il peut éventuellement atteindre préalablement par téléphone le fournisseur de service sélectionné s'il est désigné par un numéro d'appel, pour obtenir son adresse, si elle n'a pas été fournie, ainsi éventuellement que les informations de navigation utiles pour parvenir jusqu'à celui-ci, ce qui permet de s'affranchir de la nécessité de disposer d'un autre système d'aide à la navigation.

Bref, le système de l'invention permet au terminal de percevoir son environnement "services" sans que l'utilisateur ait à désigner sa position.

Les moyens de localisation du terminal peuvent être intégrés à celui-ci ou bien être externes et par exemple appartenir au réseau s'il est du type radio-cellulaire.

L'invention concerne aussi un terminal mobile selon la revendication 4.

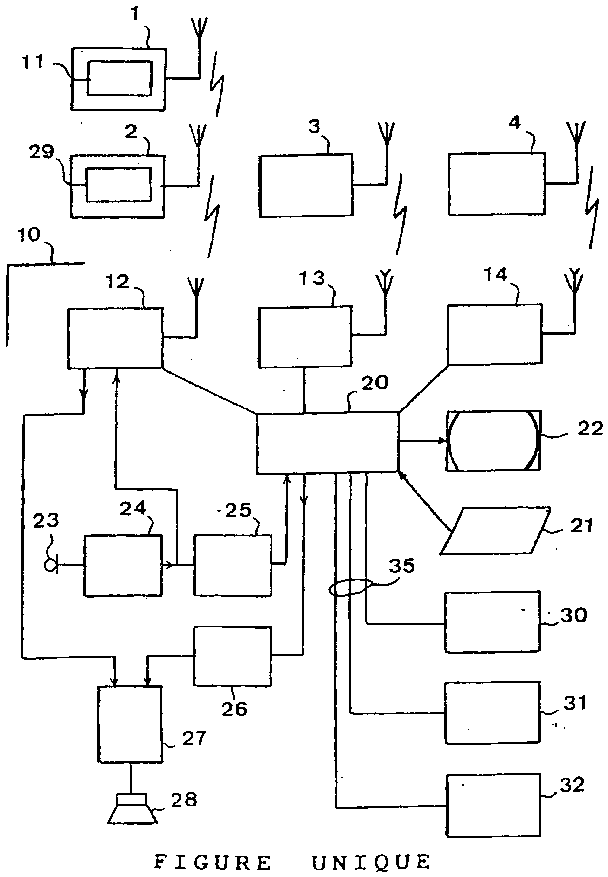

L'invention sera mieux comprise à l'aide de la description suivante d'une forme de réalisation préférée du système d'aide à la navigation terrestre de l'invention, représenté schématiquement sur la figure unique annexée.

Le système représenté d'aide à la navigation terrestre d'un mobile comporte un serveur 1, ou base de données globale, contenant des informations, ou données de localisation, spécifiant divers services et leurs fournisseurs, tels que stations-service, pharmacies, hôtels, restaurants, terrains de golf et autres. Il équivaut à un annuaire par professions, avec la liste des fournisseurs de services, avec un repère spécifique à chacun, constitué par exemple de sa position géographique (coordonnées géographiques ou nom de rue et numéro) et d'un numéro téléphonique d'appel par un réseau téléphonique, ici le réseau de radiotéléphonie cellulaire GSM. L'appel peut être vocal ou relatif à des données, de télécopie ou de courrier électronique par exemple.

Le système comporte aussi au moins un équipement mobile 10, ou terminal, installé ici à bord d'un véhicule terrestre automobile et relié au serveur 1 par radio, et précisément ici par le réseau de radiotéléphonie cellulaire GSM 2. En pratique, il existe une pluralité de tels équipements 10 et le serveur 1 est donc, dans cet exemple, commun à plusieurs équipements mobiles 10.

Dans cet exemple, il est en outre prévu un système de localisation de mobile, ici le réseau de satellites GPS, référencé 3. En outre, il est aussi prévu ici un système de diffusion d'informations d'aide à la navigation terrestre 4, ici le système RDS, diffusant par radio des informations relatives à la disponibilité des voies de circulation des zones géographiques dont la carte est diffusée, disponibilité variant avec le trafic et les travaux routiers.

L'équipement mobile d'aide à la navigation 10 comporte des circuits 12 d'un poste de radiotéléphonie cellulaire GSM, un récepteur GPS 13 et un récepteur 14 de données RDS, pour communiquer avec les réseaux ou serveurs respectifs 2, 3 et 4.

Un microprocesseur 20, relié à un clavier 21 et commandant un écran 22, est relié aux divers circuits de l'équipement 10, pour les gérer. Un microphone 23 est relié phoniquement, par un circuit d'adaptation 24 qui le polarise, aux circuits GSM 12, qui commandent, en réception radio, un circuit amplificateur 27 de commande d'un haut-parleur 28. Des circuits 25 de reconnaissance vocale sont commandés par le circuit d'adaptation 24 et fournissent les informations correspondantes au microprocesseur 20. En sens inverse, le microprocesseur 20 commande des circuits de synthèse vocale 26, commandant le circuit amplificateur 27. Au microprocesseur 20 est en outre associée une mémoire 30 de logiciels et de données, traitant diverses fonctions pour des services tels que liaisons GSM, traitement des données du serveur 1 et des données GPS et RDS, guidage du véhicule, surveillance de l'état du véhicule. Une mémoire 31, reliée au microprocesseur 20 et constituant une base de données locale, contient un annuaire local des services du serveur 1, ainsi que des données et des annuaires et agendas personnels d'utilisateurs de l'équipement 10. Une carte SIM associée à un lecteur (non représentés) permet la mise à jour de l'annuaire local des services en mémoire 31.

Des circuits 32, du genre calculateur de bord, sont reliés au microprocesseur 20 et à divers organes du véhicule pour les surveiller et au besoin émettre un message d'alarme par le réseau GSM 2 vers un centre de maintenance, non représenté. Un bus informatique 35 relie, en particulier, les circuits 30, 31 et 32 au microprocesseur 20.

Divers exemples de fonctionnement du système d'aide à la navigation terrestre vont maintenant être expliqués plus en détails.

### Diffusion globale, sélection dans l'équipement 10

Selon un exemple, le serveur 1 peut fonctionner en mode de diffusion systématique, c'est-à-dire uniquement en émission. Les équipements comme celui référencé 10 reçoivent alors, par les circuits 12 qui permettent le téléchargement, toutes les données du serveur 1 et ensuite les trient et mémorisent celles ainsi sélectionnées en fonction du ou des services souhaités et de leur position géographique ou des premiers chiffres des numéros d'appel de ces services, qui indiquent leur zone géographique pour afficher les données du serveur 1 spécifiant les services souhaités. Ceci reste vrai dans la variante ci-dessus, à intégration serveur-équipement.

### Diffusion avec sélection cellulaire par le serveur 1

Selon un autre exemple, comme le réseau GSM 2 est de type cellulaire, le serveur 1 peut diffuser systématiquement dans chaque cellule, par la station de base de celle-ci telle que celle référencée 29, uniquement les données relatives à la zone géographique de la cellule et, éventuellement, aux cellules voisines. Dans ce cas, ce sont en fait les circuits GSM 12 qui assurent la fonction de localisation implicite de l'équipement 10 et de sélection de données du serveur 1, puisque les données qu'ils reçoivent par radio dépendent de la cellule dans laquelle se trouve l'équipement 10, donc de sa position.

### Diffusion avec sélection cellulaire, asservie par les stations

Selon un autre exemple, le serveur 1 peut aussi fonctionner en mode émetteur-récepteur, asservi par les stations de base 29 qui commandent, dans le serveur 1, des circuits 11 de sélection, ou tri, géographique des données de services pour n'en recevoir que les données relatives à leur cellule. Il s'agit alors d'un mode de diffusion, dans chaque zone géographique, de données adaptées à la zone concernée.

### Emission du serveur, sur requête; localisation par l'équipement 10

A la place des stations de base 29, ce peut être l'équipement 10 qui se localise lui-même et le microprocesseur 20 commande les circuits de tri 11 par le réseau GSM 2, en leur fournissant des informations ou commandes de tri spécifiques à l'équipement 10. Ainsi, le récepteur GPS 13 peut transmettre, au serveur 1, la position du véhicule par le réseau GSM 2, en commandant les circuits GSM 12 à travers le microprocesseur 20. On utilise ici à cet effet le Service de Messages Courts (SMS) qui offre l'avantage d'être économique tout en étant bien adapté à la transmission de données. Ainsi, le microprocesseur 20 et le serveur 1 communiquent entre eux par des canaux de signalisation SMS transmettant des messages de données à travers le réseau GSM 2, pour transmettre des messages relatifs aux données du serveur 1, comme par exemple des requêtes de données vers le serveur 1, la position de l'équipement 10 et, en retour, les données des services. Les circuits de sélection 11 comparent les données de localisation des fournisseurs dans la base globale 1 et les données de localisation de l'équipement 10 fournies par les circuits de localisation de celui-ci et ils commandent des circuits d'émission, dans le serveur 1, qui eux-mêmes commandent, par transmission des données voulues, les circuits récepteurs de téléchargement 12, 20. Le serveur 1 adresse alors à l'équipement 10 uniquement les données d'une zone entourant la position de celui-ci. En particulier, le microprocesseur 20 peut déterminer, d'après une suite de relevés de position, la direction de déplacement du véhicule et en déterminer une zone géographique représentant un cône de déplacement de celui-ci, pour y limiter la recherche de services qu'il a requise.

### Emission point à point du serveur sur requête; localisation par le réseau 2

Si le serveur 1 a un mode de fonctionnement point à point, à émissions dédiées spécifiquement à chaque équipement comme celui référencé 10, une station de base comme 29 qui a détecté la présence de l'équipement 10 dans sa cellule peut se substituer au GPS 3, 13 pour informer le serveur 1 de cette présence. De ce fait, le serveur 1, appelé à travers le réseau GSM 2 par l'équipement 10 et recevant de celui-ci une requête spécifiant un ou plusieurs services, fournit en retour, par émission radio à partir de la station de base 29 voulue, les données des services voulus, limitées à la zone de la cellule considérée.

Les données d'informations relatives aux services, téléchargées dans le microprocesseur 20 à travers les circuits radio 12, sont présentées à l'utilisateur de l'équipement 10 sur l'écran 22, par exemple sous forme d'une carte électronique et d'icônes représentant chaque fournisseur de services avec par exemple sa position géographique, son adresse, son numéro d'appel téléphonique, télécopie, ou courrier électronique. Ces données peuvent aussi être restituées par les circuits de synthèse vocale 26. Afin d'éviter de saturer en données l'équipement 10, seules sont reçues par radio et présentées les données répondant au(x) critère(s) de sélection d'une requête de l'utilisateur. Cette requête peut être formulée vocalement et reconnue par les circuits 25 pour être transformée en mots de code correspondants, transmis à travers un canal SMS, ou être saisie au clavier 21 ou encore par un écran tactile (22) affichant la liste des services de l'annuaire de la mémoire 31. Les circuits ci-dessus permettent ainsi la transmission, au serveur 1, de requêtes de données.

Lorsque des données de fournisseurs de service ont ainsi été présentées à l'utilisateur, par exemple des numéros de téléphone, il peut alors sélectionner au clavier 21 ou vocalement (25), ou par écran tactile (22), l'un de ceux-ci et commander, à travers le microprocesseur 20, son émission par les circuits GSM 12 afin d'entrer en communication vocale avec le fournisseur. Ce dernier, s'il répond, peut ainsi confirmer ou infirmer sa disponibilité et en outre indiquer sa position ou situation géographique, avec les voies d'accès. Un échange de télécopies à partir du microprocesseur 20, contenant un protocole de télécopie, ou de courrier électronique, permet le même genre d'échange de questions et de réponses. En émission, les télécopies et le courrier électronique peuvent être adressés et composés vocalement (25). De même, le circuit de synthèse vocale 26 permet à l'utilisateur de prendre connaissance, de façon sonore, de télécopies ou courriers électroniques reçus, provenant d'un fournisseur de services par exemple.

Le système RDS 4, 14 permet de recevoir des données cartographiques spécifiant la disponibilité du réseau de voies de communication de la région dans laquelle se trouve le véhicule et les conditions de circulation. Il s'agit donc en particulier d'informations évolutives, dynamiques, qui viennent compléter des informations cartographiques de base du serveur 1. Le microprocesseur 20, qui reçoit ces données, peut alors reporter, sur la carte électronique transmise par le réseau RDS 4, la position du fournisseur de service finalement retenu.

## Revendications

1. Système d'aide à la navigation terrestre, comportant un réseau de communication (2, 35) pour relier une base de données globale (1, 31), contenant des données de localisation de fournisseurs de services, à un terminal mobile (10) comprenant des moyens radio (12) de liaison avec la base globale (1, 31), une base (20) et des moyens de téléchargement (12, 20, 35), dans cette base mobile (20), depuis la base globale (1, 31) et à travers le réseau (2, 35), de données de la base globale (1, 31), la base mobile (20) étant agencée pour commander des moyens (22) de présentation de données du terminal (10), des moyens (11) de sélection de données de la base globale (1, 31) étant agencés pour commander les moyens de téléchargement (12, 20, 35) par comparaison entre les données de localisation de fournisseurs et des données de localisation du terminal (10) fournies automatiquement par des moyens de localisation (3, 13, 21) du terminal qui commandent donc les moyens de sélection, dans lequel il est prévu des moyens (12, 20, 21, 23-25) de transmission, à la base globale (1, 31), d'une requête de données spécifiant un ou plusieurs services, les moyens de téléchargement (12, 20, 35) étant agencés pour télécharger uniquement les données de la base globale (1, 31) désignant des fournisseurs des services spécifiés par la requête dans une zone géographique entourant la position du terminal (10), les données des fournisseurs de services téléchargées comportant les positions géographiques respectives des fournisseurs de services, et les moyens de présentation (22) étant agencés pour présenter à l'utilisateur du terminal (10) les données des fournisseurs de services téléchargées comportant les positions géographiques respectives des fournisseurs de services pour lui permettre de sélectionner un fournisseur de service et de se rendre à la position géographique correspondante.

2. Système selon la revendication 1, dans lequel la base de données globale (1) est commune à plusieurs terminaux (10) et reliée à ceux-ci par un réseau radio (2).

3. Système selon la revendication 2, dans lequel le réseau radio (2) est du type cellulaire et comporte les moyens (29) de localisation du terminal (10).

4. Terminal mobile d'aide à la navigation terrestre d'un système selon la revendication 1, comportant des moyens radio (12) de liaison avec une base globale (1, 31), une base de données locale (20), des moyens (12, 20, 35) de téléchargement, dans la base de données locale (20), de données de la base globale (1, 31) désignant des fournisseurs de services dans une zone géographique, des moyens (22, 26-28) de présentation des données de la base locale (20), des moyens de sélection de données de la base globale (1, 31) étant agencés pour commander les moyens de téléchargement (12, 20, 35) par comparaison entre les données de localisation de fournisseurs et des données de localisation du terminal fournies automatiquement par des moyens de localisation (3, 13, 21) du terminal qui commandent donc les moyens de sélection, les moyens de localisation comportant un récepteur GPS (13) agencé pour commander les moyens radio (12), dans lequel il est prévu des moyens (12, 20, 21, 23-25) de transmission, à la base globale (1, 31), d'une requête de données spécifiant un ou plusieurs services, les moyens de téléchargement (12, 20, 35) étant agencés pour télécharger uniquement les données de la base globale (1, 31) désignant des fournisseurs des services spécifiés par la requête dans une zone géographique entourant la position du terminal (10), les données des fournisseurs de services téléchargées comportant les positions géographiques respectives des fournisseurs de services, et les moyens de présentation (22) étant agencés pour présenter à l'utilisateur du terminal (10) les données des fournisseurs de services téléchargées comportant les positions géographiques respectives des fournisseurs de services pour lui permettre de sélectionner un fournisseur de service et de se rendre à la position géographique correspondante.

5. Terminal selon la revendication 4, dans lequel les moyens radio (12) sont agencés pour échanger des messages dans des canaux de signalisation (SMS) d'un réseau radio (2).

6. Terminal selon la revendication 5, dans lequel les moyens de transmission (12, 20, 21, 23-25) sont agencés pour sélectionner un numéro d'appel d'un fournisseur de service, reçu par les moyens de téléchargement (12, 20, 35), et pour appeler celui-ci par radio.

7. Terminal selon l'une des revendications 4 à 6, dans lequel il est prévu des circuits (20) de choix d'un trajet commandés par un récepteur (14) de données diffusées (4), relatives aux conditions de circulation, et par la base locale (20).

8. Terminal selon l'une des revendications 4 à 7, dans lequel il est prévu des moyens (20, 32) de surveillance de l'état d'un véhicule portant le terminal, agencés pour commander les moyens radio (12) par des données correspondantes.

## Patentansprüche

1. Terrestrisches Navigationshilfesystem, das ein Kommunikationsnetz (2, 35) umfasst, um eine allgemeine Datenbank (1, 31), die Ortsbestimmungsdaten von Dienstleistungsanbietern enthält, mit einem mobilen Endgerät (10) zu verbinden, das Funkeinrichtungen (12) zur Verbindung mit einer allgemeinen Datenbank (1, 31), eine Datenbank (20) und Einrichtungen (12, 20, 35) zum Herunterladen von Daten aus der allgemeinen Datenbank (1, 31) über das Netz (2, 35) auf diese mobile Datenbank (20) umfasst, wobei die mobile Datenbank (20) eingerichtet ist, um Datendarstellungseinrichtungen (22) des Endgeräts (10) zu steuern, wobei Datenauswahleinrichtungen (11) der allgemeinen Datenbank (1, 31) eingerichtet sind, um die Einrichtungen (12, 20, 35) zum Herunterladen durch Vergleich zwischen den Ortsbestimmungsdaten von Anbietern und den Ortsbestimmungsdaten des Endgeräts (10) zu steuern, die automatisch von den Ortsbestimmungseinrichtungen (3, 13, 21) des Endgeräts geliefert werden, die somit die Auswahleinrichtungen steuern, wobei in ihm Einrichtungen (12, 20, 21, 23 - 25) zum Übertragen einer Datenanfrage vorgesehen sind, die einen oder mehrere Dienste spezifizieren, wobei die Einrichtungen (12, 20, 35) nur zum Herunterladen der Daten der allgemeinen Datenbank (1, 31) eingerichtet sind, die Anbieter von Diensten in einer geographischen Zone bezeichnen, die die Position des Endgeräts (10) umgibt, die in der Anfrage spezifiziert sind, wobei die heruntergeladenen Daten der Anbieter von Diensten geographische Positionen bezüglich der Anbieter der Dienste umfassen, und wobei die Datendarstellungseinrichtungen (22) zum Darstellen der heruntergeladenen Daten der Anbieter von Diensten für den Benutzer des Endgeräts (10) eingerichtet sind, die die geographischen Positionen bezüglich der Anbieter der Dienste umfassen, um es ihm zu erlauben einen Anbieter von Diensten auszuwählen und um sich zu der entsprechenden geographischen Position zu begeben.

2. System nach Anspruch 1, wobei die allgemeine Datenbank (1) von mehreren Endgeräten (10) gemeinsam genutzt wird und mit diesen über ein Funknetz (2) verbunden ist.

3. System nach Anspruch 2, wobei das Funknetz (2) von der Art eines Zellularnetzes ist und Einrichtungen (29) zur Ortsbestimmung des Endgeräts (10) umfasst.

4. Mobiles Endgerät zur terrestrischen Navigationsunterstützung eines Systems nach Anspruch 1, mit Funkeinrichtungen (12) zur Verbindung mit einer allgemeinen Datenbank (1, 31), einer lokalen Datenbank (20), Einrichtungen (12, 20, 35) zum Herunterladen von Daten von der allgemeinen Datenbank (1, 31) auf die lokale Datenbank (20), die Dienstleistungsanbieter in einem geografischen Bereich bezeichnen, Einrichtungen (22, 26 - 28) zur Darstellung der Daten der lokalen Datenbank (20), wobei Datenauswahleinrichtungen der allgemeinen Datenbank (1, 31) eingerichtet sind, um die Einrichtungen (12, 20, 35) zum Herunterladen durch Vergleich zwischen den Ortsbestimmungsdaten von Anbietern und den Ortsbestimmungsdaten des Endgeräts zu steuern, die automatisch von den Ortsbestimmungseinrichtungen (3, 13, 21) des Endgeräts geliefert werden, die somit die Auswahleinrichtungen steuern, wobei die Ortsbestimmungseinrichtungen einen GPS-Funkempfänger (13) umfassen, der eingerichtet ist, um die Funkeinrichtungen (12) zu steuern, wobei in ihm Einrichtungen (12, 20, 21, 23 - 25) zum Übertragen einer Datenanfrage vorgesehen sind, die einen oder mehrere Dienste spezifizieren, wobei die Einrichtungen (12, 20, 35) nur zum Herunterladen der Daten der allgemeinen Datenbank (1, 31) eingerichtet sind, die Anbieter von Diensten in einer geographischen Zone bezeichnen, die die Position des Endgeräts (10) umgibt, die in der Anfrage spezifiziert sind, wobei die heruntergeladenen Daten der Anbieter von Diensten geographische Positionen bezüglich der Anbieter der Dienste umfassen, und wobei die Datendarstellungseinrichtungen (22) zum Darstellen der heruntergeladenen Daten der Anbieter von Diensten für den Benutzer des Endgeräts (10) eingerichtet sind, die die geographischen Positionen bezüglich der Anbieter der Dienste umfassen, um es ihm zu erlauben einen Anbieter von Diensten auszuwählen und um sich zu der entsprechenden geographischen Position zu begeben.

5. Endgerät nach Anspruch 4, wobei die Funkeinrichtungen (12) eingerichtet sind, um Nachrichten in Zeichengabekanälen (SMS) eines Funknetzes (2) auszutauschen.

6. Endgerät nach Anspruch 5, wobei die Übertragungseinrichtungen (12, 20, 21, 23 - 25) eingerichtet sind, um eine Rufnummer eines Dienstleistungsanbieters auszuwählen, die über die Einrichtungen (12, 20, 35) zum Herunterladen eingegangen ist, und diesen über Funk anzurufen.

7. Endgerät nach einem der Ansprüche 4 bis 6, wobei Streckenwahlschaltungen (20) vorgesehen sind, die von einem Empfänger (14) für übertragene Daten (4), die sich auf die Verkehrsbedingungen beziehen, und von der lokalen Datenbank (20) gesteuert werden.

8. Endgerät nach einem der Ansprüche 4 bis 7, wobei Einrichtungen (20, 32) zur Überwachung des Zustands eines das Endgerät mit sich führenden Fahrzeugs vorgesehen sind, die eingerichtet sind, um die Funkeinrichtungen (12) durch entsprechende Daten zu steuern.

## Claims

1. Terrestrial navigation aid system, comprising a communication network (2, 35) for connecting a global data base (1, 31), containing location data for service providers, to a mobile terminal (10) comprising radio means (12) for linking to a global base (1, 31), a base (20) and means for downloading (12, 20, 35), into this mobile base (20), from the global base (1, 31) and across the network (2, 35), data from the global base (1, 31), the mobile base (20) being arranged to control data presentation means (22) of the terminal (10), data selection means (11) of the global base (1, 31) being arranged to control the downloading means (12, 20, 35) through a comparison between the location data of providers and location data of the terminal (10) supplied automatically by location means (3, 13, 21) of the terminal which thus control the selection means, wherein means (12, 20, 21, 23 - 25) for transmitting to the global base (1, 31) of a data request specifying one or more services are provided in the terminal (10), wherein the means for downloading (12, 20, 35) are configured to only download the data of the global base (1, 31) designating providers of services specified by the request in a geographic zone surrounding the position of the terminal (10), the downloaded data of the service providers comprising the respective geographic positons of the service providers, and wherein the presentation means (22) are configured to present the downloaded data of the service providers comprising the respective geographic positions of the service providers to the user of the terminal (10) to allow him to select a service provider and to get to the corresponding geographic position.

2. System according to claim 1, wherein the global data base (1) is common to a plurality of terminals (10) and connected to said terminals by a radio network (2).

3. System according to claim 2, wherein the radio network (2) is of the cellular type and includes the location means (29) of the terminal (10).

4. Mobile terrestrial navigation aid terminal of a system according to claim 1, comprising radio means (12) for linking to a global base (1, 31), a local data base (20), means (12, 20, 35) for downloading, into the local data base (20), data from the global base (1, 31) which designate service providers in a geographical area, data presentation means (22, 26-28) of the local base (20), data selection means of the global base (1, 31) being arranged to control the downloading means (12, 20, 35) through a comparison between the location data of providers and location data of the terminal supplied automatically by location means (3, 13, 21) of the terminal which thus control the selection means, the location means including a GPS receiver (13) arranged to control the radio means (12), wherein means (12, 20, 21, 23 - 25) for transmitting to the global base (1, 31) of a data request specifying one or more services are provided in the terminal (10), wherein the means for downloading (12, 20, 35) are configured to only download the data of the global base (1, 31) designating providers of services specified by the request in a geographic zone surrounding the position of the terminal (10), the downloaded data of the service providers comprising the respective geographic positons of the service providers, and wherein the presentation means (22) are configured to present the downloaded data of the service providers comprising the respective geographic positions of the service providers to the user of the terminal (10) to allow him to select a service provider and to get to the corresponding geographic position.

5. Terminal according to claim 4, wherein the radio means (12) are arranged to exchange messages in (SMS) signalling channels of a radio network (2).

6. Terminal according to claim 5, wherein the transmission means (12, 20, 21, 23-25) are arranged to select a call number of a service provider, received by the downloading means (12, 20, 35), and to call said provider via radio.

7. Terminal according to one of claims 4 to 6, wherein path selection circuits (20) are provided which are controlled by a receiver (14) of broadcast data (4) relating to the traffic conditions, and by the local base (20).

8. Terminal according to one of claims 4 to 7, wherein means (20, 32) are provided for monitoring the state of a vehicle carrying the terminal, said means being arranged to control the radio means (12) via corresponding data.
